# EUROPÄISCHE PATENTANMELDUNG

(11) **EP 2 157 492 A2**
(43) Veröffentlichungstag der Anmeldung: **24.02.2010**
(21) Anmeldenummer: 09168349.0
(22) Anmeldetag: 21.08.2009
(51) Int. Cl.: G05D 23/19

(54) **Thermostat und Verfahren zum Steuern einer Heizungs-, Lüftungs- und Klimaanlage sowie zum Bereitstellen einer Rückmeldung zum Betriebsstatus einer solchen Anlage an einen Benutzer**

(30) Priorität: 21.08.2008 NL 2001904
(71) Anmelder: Robert Bosch GmbH, 70442 Stuttgart (DE)
(72) Erfinder: Kalk, Hendrik Johannes, 7421 AZ Deventer (NL); Kalk, Paola Nina, 7421 AZ Deventer (NL)

(57) **Zusammenfassung**

Es wird ein Verfahren zum Steuern einer Heizungs-, Lüftungs- und Klimaanlage offenbart, wobei das Verfahren das Ermitteln eines Wertes der Ausgangsleistung der Heizungs-, Lüftungs- und Klimaanlage sowie das Steuern eines visuellen Indikators (70, 80) umfasst, wobei dieser visuelle Indikator (70, 80) dafür ausgelegt ist, Betriebsinformationen der Heizungs-, Lüftungs- und Klimaanlage mit einer Anzeigefrequenz auf der Grundlage des ermittelten Wertes der Ausgangsleistung der Heizungs-, Lüftungs- und Klimaanlage anzuzeigen.

## Beschreibung

Die Erfindung betrifft das Gebiet der Heizungs-, Lüftungs- und Klimaanlagen und insbesondere einen Thermostat zum Steuern einer Heizungs-, Lüftungs- und Klimaanlage. Des Weiteren betrifft die Erfindung ein Verfahren zum Steuern einer Heizungs-, Lüftungs- und Klimaanlage und ein Verfahren zum Bereitstellen einer Rückmeldung zum Betriebsstatus einer Heizungs-, Lüftungs- und Klimaanlage an einen Benutzer.

Die Bewohner bzw. Nutzer von Wohn- und Gewerbegebäuden genießen schon seit langem die Vorteile von Heizungs-, Lüftungs- und Klimaanlagen, die die Temperatur und Luftfeuchtigkeit in solchen Wohn- und Gewerbegebäuden regeln. Herkömmlicherweise war der Thermostat, der diese Temperaturregelanlage steuerte, ein ziemlich simples elektromechanisches Bauteil, das einfach mit einer Heiz- und/oder Kühlvorrichtung verdrahtet war. Nach der Installation brauchte der Benutzer lediglich einen Wählschalter zwischen Heizen und Kühlen umzustellen, um vorzugeben, welche Vorrichtung arbeiten solle, einen Wählschalter zwischen Betrieb und Automatik für eine Gebläsesteuerung umzustellen und ein Wählrad auf eine gewünschte Solltemperatur zu drehen. Eine andere Benutzerschnittstelle zu dem Thermostaten wurde weder benötigt, noch war sie verfügbar, und es wurde keine Anzeige des Systembetriebes bereitgestellt.

Zum Bereitstellen einer Anzeige des Betriebsstatus' der Heizungs-, Lüftungs- und Klimaanlage enthalten solche digitalen Thermostate heute oft Anzeigelampen vom Leuchtdioden(LED)-Typ, die leuchten, wenn die Heiz- und/oder Kühltechnik im Haus aktiv ist. Dies ermöglicht eine sofortige Sichtanzeige des Betriebsstatus' der Heiz- und/oder Kühltechnik. Dies ist zum Beispiel in der Europäischen Patentanmeldung EP 1 879 090 A2 gezeigt.

Eine alternative Lösung ist in der Internationalen Patentanmeldung WO 2007/027645 offenbart, die einen Thermostat für eine Heizungs-, Lüftungs- und Klimaanlage offenbart, der ein Anzeigesystem aufweist, das dem Benutzer Informationen über die Funktion des Heiz- und Kühlsystems übermittelt. Das Anzeigesystem zeigt bewegte Symbole auf der Benutzeranzeige des digitalen Thermostaten an. WO 2007/027645 offenbart des Weiteren, dass ein Bitmap-Bild auf der Benutzeranzeige des digitalen Thermostaten mit einem anderen Bitmap-Bild mit einer vorgegebenen Frequenz überschrieben wird, wodurch der Betrieb der Heiz- und/oder Kühltechnik angezeigt wird. WO 2007/027645 offenbart des Weiteren, dass die Frequenz des Überschreibens variiert wird, um verschiedene Gebläsedrehzahlen sichtbar darzustellen.

Bei Verwendung einer Heizungs-, Lüftungs- und Klimaanlage ist festgestellt worden, oder es gilt zumindest als allgemein akzeptiert, dass die ideale Temperatureinstellung zwischen 18°C und 20°C liegen sollte. Eine Temperatur über 20°C im Winter oder unter 18°C im Sommer hat einen zu hohen Energieverbrauch zur Folge. Zwar sind sich die meisten Menschen der Notwendigkeit, Energie zu sparen, bewusst und sind bereit, daran mitzuwirken, doch das Erreichen dieses Ziels ist nicht immer möglich, was zu einem großen Teil auf menschlichen Irrtum oder Nachlässigkeit zurückzuführen ist. Zum Beispiel wird Energie vergeudet, wenn der Verbraucher vergisst, die Heizungs-, Lüftungs- und Klimaanlage abzustellen, wenn niemand im Haus ist. Energie wird auch vergeudet, wenn der Verbraucher es versäumt, die Einstellung während der Nacht auf Nachtbetrieb zu justieren, oder wenn er sich an unangemessene Temperatureinstellungen (zu hoch und/oder zu niedrig) gewöhnt hat. Weder EP 1 879 090 noch WO 2007/027645 sind in der Lage, solche Informationen an einen Benutzer der Heizungs-, Lüftungs- und Klimaanlage zu übermitteln.

In der Europäischen Patentanmeldung EP 1 703 356 A1 wird vorgeschlagen, einen Thermostat mit einer LED auszustatten, die Licht von unterschiedlicher Farbe entweder entsprechend einer Solltemperatur oder einer gemessenen Raumtemperatur abstrahlt. EP 1 7030 356 A1 offenbart, dass, wenn eine der Temperaturen relativ hoch ist, die Farbe des abgestrahlten Lichts im roten Bereich liegt. Wenn eine der Temperaturen relativ niedrig ist, so liegt die Farbe des abgestrahlten Lichts im blauen Bereich. Auf diese Weise erhält der Benutzer Informationen darüber, ob seine Temperatureinstellungen innerhalb eines normalen Bereichs liegen oder nicht.

Obgleich EP 1 703 356 A1 einen Benutzer über mögliche abweichende Temperatureinstellungen informiert, kann der Benutzer solche Einstellungen akzeptieren und hat keine Rückmeldung über die Ausgangsleistung der Heizungs-, Lüftungs- und Klimaanlage. Somit informiert EP 1 703 356 A1 einen Benutzer nicht in vollem Umfang über den Energieverbrauch der Heizungs-, Lüftungs- und Klimaanlage.

Es wäre darum wünschenswert, einen Thermostat bereitzustellen, der einem Benutzer eine Rückmeldung über die Ausgangsleistung der Heizungs-, Lüftungs- und Klimaanlage gibt. Es wäre des Weiteren wünschenswert, wenigstens eine gute Alternative zu den bekannten Thermostaten bereitzustellen.

Um einen oder mehrere dieser Wünsche zu realisieren, wird in einem ersten Aspekt der Erfindung ein Thermostat zum Steuern einer Heizungs-, Lüftungs- und Klimaanlage bereitgestellt, wobei der Thermostat einen visuellen Indikator zum Anzeigen von Betriebsinformationen der Heizungs-, Lüftungs- und Klimaanlage umfasst, wobei der visuelle Indikator dafür geeignet ist, diese Informationen mit einer Anzeigefrequenz anzuzeigen. Der Thermostat ist dafür ausgelegt, die Anzeigefrequenz auf der Grundlage der Höhe der Ausgangsleistung der Heizungs-, Lüftungs- und Klimaanlage zu justieren. Durch Koppeln der Leistung oder des Energieverbrauchs der Heizungs-, Lüftungs- und Klimaanlage an die Frequenz, mit der der visuelle Indikator deren Betriebsinformationen anzeigt, wird der Benutzer direkt über die Höhe der Ausgangsleistung informiert.

In einer Ausführungsform wird die Ausgangsleistung der Heizungs-, Lüftungs- und Klimaanlage auf der Grundlage einer Temperaturdifferenz zwischen einem gewünschten Temperaturwert und einem Umgebungstemperaturwert ermittelt.

In einer Ausführungsform nimmt die Anzeigefrequenz bei sinkender Höhe der Ausgangsleistung ab und umgekehrt. Damit erhält der Benutzer eine Rückmeldung, die im Prinzip mit einem Herzschlag verglichen werden kann, d. h. je leistungsstärker die Heizungs-, Lüftungs- und Klimaanlage arbeitet, desto häufiger werden die Informationen angezeigt. Dadurch erhält der Benutzer auf eine sehr intuitive Weise Informationen zum Betriebsstatus der Heizungs-, Lüftungs- und Klimaanlage.

In einer Ausführungsform umfasst der visuelle Indikator eine Lichtquelle, insbesondere eine LED. Auf diese Weise können Informationen deutlich sichtbar übermittelt werden.

In einer Ausführungsform wird die Lichtquelle so gesteuert, dass sie Licht in einer pulsierenden Weise aussendet, wobei die Lichtquelle Licht zwischen einem größten Pegel und einem kleinsten Pegel aussendet. Auf diese Weise wird der Effekt eines Herzschlags des Systems zusätzlich betont.

In einer Ausführungsform ist die Lichtquelle dafür ausgelegt, Licht in verschiedenen Farben auszusenden, wobei der Thermostat des Weiteren dafür ausgelegt ist, die Farbe des abgestrahlten Lichts in Abhängigkeit von einem Temperaturwert zu steuern. Auf diese Weise ist es ebenfalls möglich, dem Benutzer der Heizungs-, Lüftungs- und Klimaanlage eine Rückmeldung über die tatsächlichen Temperatureinstellungen zu geben, die er verwendet. Durch Verwenden von Farben als eine Anzeige des Temperaturwertes brauchen die Informationen nicht interpretiert zu werden, wie es zum Beispiel bei einer Darstellung in Zahlenform der Fall ist.

In einer Ausführungsform ist der Temperaturwert ein Solltemperaturwert, so dass der Benutzer eine direkte Rückmeldung zu seinen Einstellungen bekommt.

In einer Ausführungsform ist der Temperaturwert ein gemessener Umgebungstemperaturwert, so dass der Benutzer eine direkte Rückmeldung über das Temperaturniveau in seiner Umgebung erhält.

In einer Ausführungsform umfasst der visuelle Indikator eine weitere Lichtquelle, die dafür ausgelegt ist, Licht in verschiedenen Farben auszusenden, und wobei der Thermostat des Weiteren dafür ausgelegt ist, die Farbe des abgestrahlten Lichts der weiteren Lichtquelle in Abhängigkeit von einem gemessenen Umgebungstemperaturwert zu steuern. Auf diese Weise wird die Rückmeldung über mindestens zwei Lichtquellen aufgeteilt, wodurch der Nutzwert des Thermostaten erhöht wird.

In einer Ausführungsform umfasst der visuelle Indikator eine Lichtquelle, die dafür ausgelegt ist, farbiges Licht über mindestens einen wesentlichen Teil des sichtbaren Frequenzspektrums auszusenden. Dabei ändert sich die Farbfrequenz des ausgesendeten Lichts entsprechend einer zwischen einem minimalen Farbfrequenzwert (Bsp. 4 x 10¹⁴ Hz, rot) und einem maximalen Farbfrequenzwert (Bsp. 7,5 x 10¹⁴ Hz, violett) abwechselnd ansteigenden und absteigenden Übergangsfunktion über der Zeit. Diese ansteigende und absteigende Übergangsfunktion zwischen dem minimalen und dem maximalen Farbfrequenzwert kann zum Beispiel einen linearen (rampenförmigen) oder einen sinusförmigen Verlauf über der Zeit annehmen und dabei diskrete oder kontinuierliche Farbfrequenzänderungen aufweisen. Die Zyklusdauer für eine ansteigende und absteigende Übergangsfunktion (so bei einem allgemeinen oder sinusförmigen Verlauf) bzw. die Frequenzänderungsgeschwindigkeit (so bei einem kontinuierlichen linearen Verlauf) repräsentiert die Höhe der Ausgangsleistung der Heizungs-, Lüftungs- und Klimaanlage. Somit ist der Thermostat derart gestaltet, dass die Lichtquelle des visuellen Indikators relativ ruhige weil stetige Lichtsignale aussendet, also kein pulsierendes, "flackerndes" Ein/Aus der Lichtquelle, das unter Umständen mit einer Warn- oder Fehleranzeige verwechselt werden könnte. Die Zyklusdauer oder Farbänderungsgeschwindigkeit von violett über blau, grün, gelb zu rot und wieder zurück zu violett kann variieren und ist mit der Höhe der Geräteleistung korreliert. Beispielsweise kann eine lange Zyklusdauer von 10 Sekunden eine geringe Geräteleistung, eine kurze Zyklusdauer von 1 Sekunde eine hohe Geräteleistung bedeuten, wie eine weitere Analogie zum oben genannten Herzschlag.

In einer Ausführungsform umfasst der visuelle Indikator eine Lichtquelle, die dafür ausgelegt ist, dass das Farbfrequenzspektrum des zwischen einem minimalen und einem maximalen Farbfrequenzwert abgestrahlten Lichts einem Temperaturwertespektrum zugeordnet ist, und dass die ansteigende und/oder absteigende Übergangsfunktion bei einer einen vorgebbaren Solltemperaturwert repräsentierenden Farbe für eine vorgebbare Zeitdauer verharrt. So kann beispielsweise das Farbfrequenzspektrum von 4 x 10¹⁴ Hz (rot) bis 7,5 x 10¹⁴ Hz (violett) auf ein Temperaturwertespektrum von 15 °C bis 30 °C abgebildet sein. Somit ist der Thermostat derart gestaltet, dass die Zyklusdauer des visuellen Indikators zusätzlich zu dem vorstehend beschriebenen Zyklus einer ansteigenden und absteigenden Übergangsfunktion (Farbänderungsgeschwindigkeit proportional zu Geräteleistung) weiter eine Haltedauer bei einer konstanten Farbfrequenz umfasst. Diese Haltedauer kann beispielsweise 1 oder 2 Sekunden betragen und entweder nur bei ansteigenden, oder nur bei absteigenden, oder bei ansteigenden und absteigenden Funktionsverläufen der Übergangsfunktion auftreten. Die gehaltene, konstante Farbfrequenz gibt innerhalb der Farb-Temperatur-Zuordnung den Wert einer eingestellten Solltemperatur wieder.

In einer Ausführungsform ist der visuelle Indikator des Weiteren dafür ausgelegt, alphanumerisch und/oder grafisch die Ist-Ausgangsleistung oder den Ist-Wirkungsgrad der Heizungs-, Lüftungs- und Klimaanlage anzuzeigen, um den Informationsgehalt für einen Benutzer weiter aufzuwerten.

Gemäß einem zweiten Aspekt der Erfindung wird ein Verfahren zum Steuern einer Heizungs-, Lüftungs- und Klimaanlage bereitgestellt, wobei das Verfahren das Ermitteln eines Wertes der Ausgangsleistung der Heizungs-, Lüftungs- und Klimaanlage und das Steuern eines visuellen Indikators umfasst, wobei dieser visuelle Indikator dafür ausgelegt ist, Betriebsinformationen der Heizungs-, Lüftungs- und Klimaanlage mit einer Anzeigefrequenz auf der Grundlage des ermittelten Wertes der Ausgangsleistung der Heizungs-, Lüftungs- und Klimaanlage anzuzeigen.

Gemäß einem dritten Aspekt der Erfindung wird ein Verfahren zum Übermitteln einer Rückmeldung zum Betriebsstatus einer durch einen Thermostat gesteuerten Heizungs, Lüftungs- und Klimaanlage an einen Benutzer bereitgestellt, wobei der Thermostat einen visuellen Indikator umfasst, der dafür ausgelegt ist, Betriebsinformationen der Heizungs-, Lüftungs- und Klimaanlage anzuzeigen, wobei das Verfahren das Ermitteln eines Wertes einer Ausgangsleistung der Heizungs-, Lüftungs- und Klimaanlage und das Steuern eines visuellen Indikators auf der Grundlage des ermittelten Wertes der Ausgangsleistung der Heizungs-, Lüftungs- und Klimaanlage umfasst.

In einer Ausführungsform des Verfahrens sendet die Lichtquelle des visuellen Indikators (70, 80) farbiges Licht über mindestens einen wesentlichen Teil des sichtbaren Frequenzspektrums aus. Dabei ändert sich die Farbfrequenz des ausgesendeten Lichts entsprechend einer zwischen einem minimalen Farbfrequenzwert (Bsp. 4 x 10¹⁴ Hz, rot) und einem maximalen Farbfrequenzwert (Bsp. 7,5 x 10¹⁴ Hz, violett) abwechselnd ansteigenden und absteigenden Übergangsfunktion über der Zeit. Diese ansteigende und absteigende Übergangsfunktion zwischen dem minimalen und dem maximalen Farbfrequenzwert kann zum Beispiel einen linearen (rampenförmigen) oder einen sinusförmigen Verlauf über der Zeit annehmen und dabei diskrete oder kontinuierliche Farbfrequenzänderungen aufweisen. Die Zyklusdauer für eine ansteigende und absteigende Übergangsfunktion (so bei einem allgemeinen oder sinusförmigen Verlauf) bzw. die Frequenzänderungsgeschwindigkeit (so bei einem kontinuierlichen linearen Verlauf) repräsentiert die Höhe der Ausgangsleistung der Heizungs-, Lüftungs- und Klimaanlage.

In einer Ausführungsform des Verfahrens ist das Farbfrequenzspektrum des abgestrahlten Lichts einem Temperaturwertespektrum zugeordnet (d.h. repräsentieren die Farbfrequenzen des zwischen einem minimalen und einem maximalen Farbfrequenzwert abgestrahlten Lichts Temperaturwerte). So kann beispielsweise das Farbfrequenzspektrum von 4 x 10¹⁴ Hz (rot) bis 7,5 x 10¹⁴ Hz (violett) auf ein Temperaturwertespektrum von 15 °C bis 30 °C abgebildet sein. Des Weiteren verharrt die ansteigende und/oder absteigende Übergangsfunktion bei einer einen Solltemperaturwert repräsentierenden Farbe für eine vorgebbare Zeitdauer. Somit ist das Verfahren derart gestaltet, dass die Zyklusdauer des visuellen Indikators zusätzlich zu dem vorstehend beschriebenen Zyklus einer ansteigenden und absteigenden Übergangsfunktion (bei linearem Verlauf: Farbänderungsgeschwindigkeit proportional zu Geräteleistung) weiter eine Haltedauer bei einer konstanten Farbfrequenz umfasst. Diese Haltedauer kann beispielsweise 1 oder 2 Sekunden betragen und entweder nur bei ansteigenden, oder nur bei absteigenden, oder bei ansteigenden und absteigenden Funktionsverläufen der Übergangsfunktion auftreten. Die gehaltene, konstante Farbfrequenz gibt innerhalb der Farb-Temperatur-Zuordnung den Wert einer Solltemperatur wieder.

Der Wert dieser und weiterer Aspekte der Erfindung wird in dem Maße deutlich, wie die Erfindung anhand der folgenden detaillierten Beschreibung besser verstanden und in Verbindung mit den begleitenden Zeichnungen betrachtet wird, in denen gleiche Bezugszeichen gleiche Teile bezeichnen.
- Figur 1: zeigt einen Thermostat gemäß der Erfindung, und
- Figur 2: zeigt eine Zuordnung von Farbfrequenzspektrum und Temperaturwertespektrum sowie eine Farbänderungsfunktion mit ansteigender und absteigender Rampenfunktion.

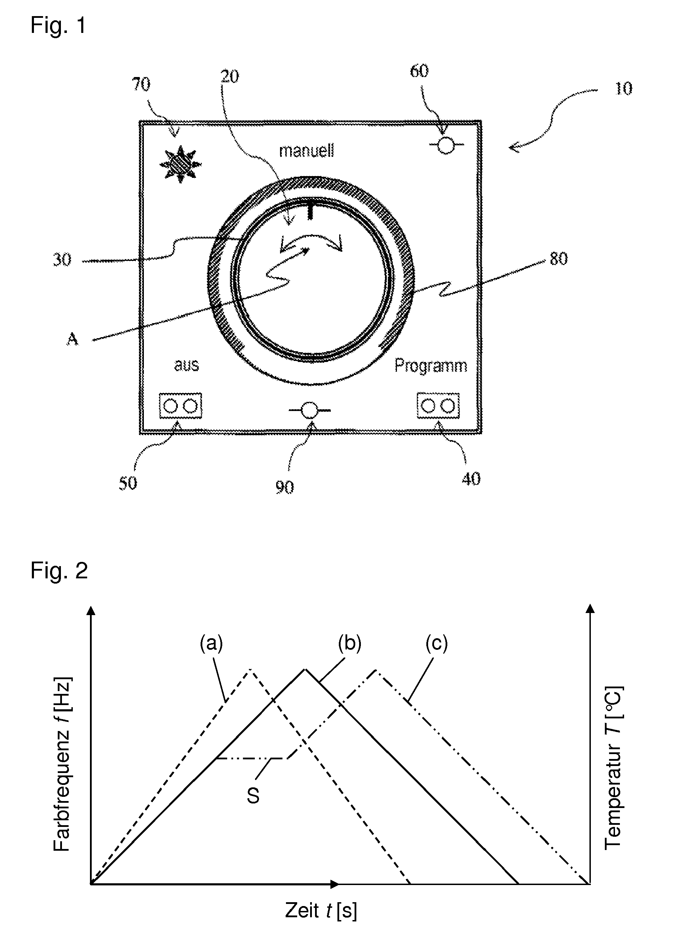

Figur 1 zeigt eine Draufsicht auf einen Thermostat 10 gemäß einem Beispiel der Erfindung. Figur 1 zeigt den Thermostat 10 so, wie ein Benutzer ihn sehen würde. Der Thermostat 10 ist dafür konfiguriert, eine Heizungs-, Lüftungs- und Klimaanlage zu steuern, und in dem Beispiel von Figur 1 wird der Thermostat 10 zum Steuern eines Kessels einer Zentralheizanlage verwendet. Es versteht sich, dass die Erfindung nicht auf das gezeigte Beispiel beschränkt ist, sondern auf Heizungs-, Lüftungs- und Klimaanlagen allgemein anwendbar ist.

Der Thermostat 10 umfasst ein Benutzereingabeelement 20. Mit dem Benutzereingabeelement 20 kann ein Benutzer manuell die Solltemperatur verändern, das Heizsystem ein- oder ausschalten und einen sogenannten Schaltpunktmodus des Thermostaten 10 wählen, mit dem ein vorprogrammierter Schaltzyklus aktiviert wird. In dem Beispiel von Figur 1 ist das Benutzereingabeelement 20 ein Drehknopf 30, der um seine Mittelachse gedreht werden kann, wie durch den Doppelpfeil A angedeutet ist. Wenn der Drehknopf 30 bis zum Anschlag entgegen dem Uhrzeigersinn gedreht wird, so wird das Heizsystem abgeschaltet, wie mit dem Wort "aus" angedeutet ist. Wird der Knopf 30 wieder im Uhrzeigersinn gedreht, so wird das Heizsystem eingeschaltet, und eine Temperatureinstellung oder ein gewünschter Temperaturwert kann eingestellt werden, wie mit dem Wort "manuell" angedeutet ist. Wird der Knopf 30 bis zum Anschlag im Uhrzeigersinn gedreht, so wird der Thermostat 10 in seinen Schaltpunktmodus versetzt, und ein vorprogrammierter Zyklus (sofern verfügbar) wird durch den Thermostat ausgeführt, wie mit dem Wort "Programm" angedeutet ist. Um den Schaltpunktmodus ausführen zu können, wird der Thermostat 10 vorzugsweise mit einem elektronischen Speicher und einem Prozessor ausgestattet. Der Thermostat 10 kann in einem solchen Fall mit einer ersten Kommunikationsvorrichtung 40 ausgestattet sein, die es dem Thermostat 10 ermöglicht, mit einer Programmiervorrichtung, wie zum Beispiel einem (nicht gezeigten) Personalcomputer, entweder drahtlos, wie zum Beispiel über Bluetooth, Wi-Fi oder Funk, oder über Draht zu kommunizieren. Die erste Kommunikationsvorrichtung 40 kann auch einen Steckplatz zum Aufnehmen eines externen Speichers umfassen, wie zum Beispiel eines USB-Speichersticks oder einer sonstigen geeigneten Speicherkarte.

Der Thermostat 10 umfasst des Weiteren eine zweite Kommunikationsvorrichtung 50, die für eine Zweiwegkommunikation mit dem Heizsystem ausgelegt ist. Die zweite Kommunikationsvorrichtung 50 kann auch in die erste Kommunikationsvorrichtung 40 integriert sein. Des Weiteren kann die zweite Kommunikationsvorrichtung 50 mit dem Kessel auf verdrahtete oder drahtlose Weise kommunizieren. Wie jeder übliche Thermostat steuert der Thermostat 10 das Heizsystem auf der Grundlage einer Differenz zwischen einem Soll- oder gewünschten Temperaturwert und einer Umgebungstemperatur des Ortes, wo sich der Thermostat 10 befindet. Zu diesem Zweck ist der Thermostat 10 mit einem Umgebungstemperatursensor 60 versehen. Die durch den Umgebungstemperatursensor 60 gemessene Temperatur und die durch den Benutzer eingestellte gewünschte Temperatur werden als Temperaturdaten in den Prozessor des Thermostaten 10 eingespeist, der anhand dieser Daten das Heizsystem steuert. Oder anders ausgedrückt: Der Thermostat 10 kann die erforderliche Ausgangsleistung bestimmen, die das Heizsystem liefern muss, um die gewünschte Temperatur zu erhalten.

Normalerweise werden Thermostate mit einer alphanumerischen Anzeige ausgestattet, welche die Solltemperatur und die Umgebungstemperatur anzeigt. Der erfindungsgemäße Thermostat schlägt eine andere Verfahrensweise vor, insbesondere im Hinblick auf das allgemeine Ziel, den Benutzern deutlicher vor Augen zu führen, wie sie Energie sparen können. Der Thermostat 10 ist mit einem ersten visuellen Indikator 70 ausgestattet, der eine mehrfarbige Lichtquelle umfasst, insbesondere eine mehrfarbige LED oder eine Anordnung aus mehreren LEDs, die Licht über mindestens einen wesentlichen Teil des sichtbaren Spektrums aussenden können. In der Praxis bedeutet das, dass der erste visuelle Indikator 70 Licht im Bereich von mindestens Dunkelblau bis Purpur aussenden kann. Die konkrete Farbe des abgestrahlten Lichts wird durch die Umgebungs- oder Ist-Temperatur bestimmt und zeigt an, ob die Ist-Temperatur über oder unter einer Temperatur liegt, die allgemein als komfortabel akzeptiert wird. Je höher die Temperatur über diese bevorzugte Temperatur hinaus ansteigt, desto mehr Licht sendet der visuelle Indikator 70 oder die LED im roten Bereich aus. Umgekehrt bedeutet das: Je stärker die Temperatur unter die bevorzugte Temperatur abfällt, desto mehr Licht sendet der visuelle Indikator 70 oder die LED im blauen Bereich aus. Wenn die Temperatur im Wesentlichen der bevorzugten Temperatur entspricht, so sendet die LED ein Licht aus, das in einem Grünton gehalten ist, was anzeigt, dass die Umgebungstemperatur der bevorzugten Temperatur entspricht.

Das gleiche Prinzip kann zum Anzeigen der Temperatur verwendet werden, die durch den Benutzer mittels des Knopfes 30 eingestellt wurde - entweder durch manuelles Einstellen der gewünschten Temperatur oder unter Verwendung des Schaltpunktmodus' des Thermostaten 10. Der Prozessor vergleicht die gewünschte Temperatur mit der Temperatur, die allgemein als komfortabel akzeptiert ist, und steuert einen zweiten visuellen Indikator 80, der ebenfalls eine Lichtquelle umfasst, insbesondere eine LED oder eine Anordnung mehrerer LEDs, die Licht in verschiedenen Farben aussenden können. Ähnlich wie oben beschrieben, vergleicht der Thermostat oder sein Prozessor die Solltemperatur mit der bevorzugten Temperatur und steuert die Farbe des Lichts, das durch den zweiten visuellen Indikator 80 auf dieser Grundlage abgestrahlt wird. Falls die gewünschte oder Solltemperatur höher ist als die bevorzugte Temperatur, so liegt das abgestrahlte Licht im roten Bereich des sichtbaren Spektrums. Wenn andererseits die Solltemperatur niedriger ist als die bevorzugte Temperatur, so liegt das abgestrahlte Licht im blauen Bereich des sichtbaren Spektrums. Falls die gewünschte Temperatur im Wesentlichen der bevorzugten Temperatur entspricht, so liegt das abgestrahlte Licht im grünen Bereich des sichtbaren Spektrums. Indem der Benutzer eine direkte Rückmeldung darüber erhält, wie sich seine Einstellungen im Vergleich zu den allgemein akzeptierten oder bevorzugten Temperatureinstellungen ausnehmen, kann das Energiebewusstsein des Benutzers gesteigert werden.

In dem Beispiel von Figur 1 ist der zweite visuelle Indikator 80 als ein Halbkreis geformt, der den Knopf 30 umgibt. Es ist jedoch auch möglich, eine einzelne Lichtquelle bereitzustellen, die Licht in verschiedenen Farben anzeigen kann, oder auch den ersten 70 und den zweiten 80 visuellen Indikator ineinander zu integrieren, wobei der einzelne visuelle Indikator die gewünschte Temperatur anzeigt, wenn der Knopf 30 verwendet wird, und in allen anderen Situationen die Umgebungstemperatur anzeigt.

Die Helligkeit des abgestrahlten Lichts kann auch direkt proportional zu der Umgebungsbeleuchtung sein, dergestalt, dass die Farbe in hellen und in dunklen Umgebungslichtverhältnissen gleichermaßen sichtbar bleibt. Zu diesem Zweck ist der Thermostat 10 des Weiteren mit einem Umgebungslichtsensor 90 ausgestattet.

Obgleich die Verwendung von farbigem Licht als ein Mittel zum Bereitstellen einer Rückmeldung zum Status des Heizsystems an einen Benutzer bereits das Energiebewusstsein der Benutzer hebt, haben die Erfinder erkannt, dass die übermittelte Rückmeldung noch weiter verbessert werden kann, indem der Benutzer eine Rückmeldung über die Höhe der Ausgangsleistung des Heizsystems erhält, die wiederum die Temperaturdifferenz zwischen der gewünschten Temperatur und der Umgebungstemperatur anzeigt oder durch diese Differenz bestimmt wird. Je größer diese Differenz ist, desto höher ist die Ausgangsleistung des Heizsystems. Die Erfinder haben erkannt, dass analog dem Herzschlag einer Person, die sich körperlich betätigt (d. h. je intensiver die Person arbeitet, desto schneller ist ihr Herzschlag), eine Rückmeldung in einer sichtbaren Form mit einer Anzeigefrequenz, die die Höhe der Ausgangsleistung angibt, eine intuitive und informative Möglichkeit des Übermittelns von Informationen darüber ist, wie leistungsstark das Heizsystem arbeitet. Folglich ist der Thermostat 10 dafür ausgelegt, die Anzeigefrequenz auf der Grundlage der Höhe der Ausgangsleistung des Heizsystems oder der Heizungs-, Lüftungs- und Klimaanlage zu steuern. Genauer gesagt, sollte die Anzeigefrequenz vorzugsweise mit abnehmender Höhe der Ausgangsleistung abnehmen und umgekehrt. Eine sehr zweckmäßige Form des Bereitstellens dieser Rückmeldung ist, den ersten oder den zweiten visuellen Indikator 70, 80 auf diese Weise so zu steuern, dass Licht in einer pulsierenden Weise zwischen einer größten Leuchtkraft und einer kleinsten Leuchtkraft abgestrahlt wird, wobei die Frequenz von der Ausgangsleistung des Heizsystems abhängig ist. Dadurch erhält man eine sichtbare Animation der Rückmeldung, die stark an einen Herzschlag erinnert. Anstatt die visuellen Indikatoren 70, 80 zu steuern, ist es auch möglich, einen separaten visuellen Indikator bereitzustellen. Es ist sogar vorstellbar, dass der visuelle Indikator, der die Informationen zum Ausgangsleistungspegel des Heizsystems anzeigt, physisch von dem Thermostat getrennt ist.

Zusätzlich zu dem oben Dargelegten kann das Energiebewusstsein eines Benutzers weiter gesteigert werden, indem man dem Benutzer noch eine weitere Rückmeldung, entweder in alphanumerischer und/oder in grafischer Form, über die Ist-Ausgangsleistung und/oder den Ist-Wirkungsgrad der Heizungs-, Lüftungs- und Klimaanlage anbietet. Dies kann zum Beispiel mit Hilfe eines LCD-Bildschirms als visueller Indikator bewerkstelligt werden, wobei dieser Bildschirm diese Informationen anzeigt. Es ist anzumerken, dass diese Art von Rückmeldung auch unabhängig verwendet werden kann. Ein solcher Thermostat würde einen visuellen Indikator umfassen, der dafür ausgelegt ist, Betriebsinformationen einer Heizungs-, Lüftungs- und Klimaanlage anzuzeigen, wobei der visuelle Indikator dafür ausgelegt ist, alphanumerisch und/oder grafisch die Ist-Ausgangsleistung und den Ist-Wirkungsgrad der Heizungs-, Lüftungs- und Klimaanlage anzuzeigen.

Der Thermostat gemäß der vorliegenden Erfindung erlaubt es dem Benutzer, auf bequeme Weise Status-, Nutzungs- und Umgebungsinformationen mit weit weniger Aufwand zu erhalten als mit herkömmlichen Thermostaten und sein Energiebewusstsein bezüglich des Energieverbrauchs des Heizsystems zu steigern.

In dieser Spezifikation sind verschiedene detaillierte Ausführungsformen der vorliegenden Erfindung offenbart worden. Es versteht sich jedoch, dass die offenbarten Ausführungsformen die Erfindung lediglich beispielhaft veranschaulichen; sie kann in unterschiedlichen Formen verkörpert sein. Darum dürfen konkrete strukturelle und funktionale Details, die in dieser Spezifikation offenbart sind, nicht als einschränkend verstanden werden, sondern lediglich als Basis für die Ansprüche und als eine repräsentative Ausgangsgrundlage, um einen Fachmann zu lehren, die vorliegende Erfindung in praktisch jeder hinreichend detaillierten Struktur auf verschiedene Weise zu praktizieren. Des Weiteren sollen die in dieser Spezifikation verwendeten Begriffe und Wendungen keine Einschränkung darstellen, sondern sollen vielmehr eine verständliche Beschreibung der Erfindung ermöglichen. Insbesondere ist die Erfindung nicht auf ein Heizsystem, wie oben beispielhaft verwendet, beschränkt, sondern kann für jede beliebige Heizungs-, Lüftungs- und Klimaanlage verwendet werden.

Es ist zum Beispiel auch möglich, einen LCD-Bildschirm als einen visuellen Indikator zu verwenden, wobei der LCD-Bildschirm ein animiertes Symbol mit einer Anzeigefrequenz anzeigt, die für die Ausgangsleistung der Heizungs-, Lüftungs- und Klimaanlage steht.

Figur 2 zeigt in Form eines Graphen eine Zuordnung von Farbfrequenzspektrum (linke vertikale Achse) und Temperaturwertespektrum (rechte vertikale Achse). Dabei ist ein Frequenzbereich auf einen Temperaturbereich abgebildet, sodass eine bestimmte Farbe (Frequenz) einen bestimmten Temperaturwert repräsentiert. Die dargestellten Rampenfunktionen (a, b, c) bestehen aus jeweils einem ansteigenden und einem absteigenden Ast und geben den Verlauf einer sich mit der Zeit ändernden Farbe der Lichtquelle des visuellen Indikators wieder. Die Zyklusdauer für eine ansteigende und absteigende Rampe (bzw. die Frequenzänderungsgeschwindigkeit (Steigung Δf / Δt der Rampe) repräsentiert die Höhe der Ausgangsleistung der Heizungs-, Lüftungs- und Klimaanlage dergestalt, dass Kurve a mit einer kürzeren Zyklusdauer eine höhere Geräteleistung als Kurve b oder Kurve c darstellt (Herzschlag-Analogie).

In Figur 2, Kurve c, ist, neben der durch die Zyklusdauer angegebenen Geräteleistung, durch das Verharren der Farbe auf einem konstanten Farbfrequenzwert S während einer Haltedauer zusätzlich noch ein vorgebbarer Solltemperaturwert veranschaulicht. Dieses Verharren der Farbe kann, wie dargestellt, nur bei einer der beiden Rampendurchläufe (hier in der ansteigenden Rampe) oder bei beiden Rampendurchläufen eines Zyklus auftreten.

Obgleich die vorliegende Erfindung anhand des Beispiels eines Heizsystems im Besonderen und einer Heizungs-, Lüftungs- und Klimaanlage im Allgemeinen beschrieben ist, ist anzumerken, dass das der vorliegenden Erfindung zugrunde liegende Prinzip auch in anderen Bereichen verwendet werden kann, wo eine Temperatursteuerung zum Einsatz kommt. Beispiele dafür sind Öfen oder Mikrowellenherde, thermostatische Wasserhähne für die Warmwasserversorgung, Saunas usw.

Die Wörter "ein" oder "eine" meinen in dieser Spezifikation "ein oder mehr als ein". Das Wort "mehrere" meint in dieser Spezifikation "zwei oder mehr als zwei". Der Begriff "eine weitere" meint in dieser Spezifikation "mindestens eine zweite oder mehr". Die Wörter "enthalten" und/oder "aufweisen" meinen in dieser Spezifikation "umfassen" (d. h. eine offene Formulierung, die weitere Elemente oder Schritte nicht ausschließt). Bezugszeichen in den Ansprüchen sind nicht so auszulegen, als schränkten sie den Geltungsbereich der Ansprüche oder der Erfindung ein.

Die bloße Tatsache, dass bestimmte Gedanken in voneinander verschiedenen abhängigen Ansprüchen dargelegt sind, bedeutet nicht, dass nicht eine Kombination dieser Gedanken nutzbringend verwendet werden könnte.

Die Funktionen verschiedener in den Ansprüchen genannter Komponenten können durch einen einzelnen Prozessor oder ein sonstiges Bauelement übernommen werden.

## Patentansprüche

1. Thermostat (10) zum Steuern einer Heizungs-, Lüftungs- und Klimaanlage, wobei der Thermostat (10) einen visuellen Indikator (70, 80) zum Anzeigen von Betriebsinformationen der Heizungs-, Lüftungs- und Klimaanlage umfasst, wobei der visuelle Indikator (70, 80) dafür ausgelegt ist, diese Informationen mit einer Anzeigefrequenz anzuzeigen,
**dadurch gekennzeichnet, dass**
der Thermostat (10) dafür ausgelegt ist, die Anzeigefrequenz auf der Grundlage der Höhe der Ausgangsleistung der Heizungs-, Lüftungs- und Klimaanlage zu justieren.

2. Thermostat (10) nach Anspruch 1, wobei die Ausgangsleistung der Heizungs-, Lüftungs- und Klimaanlage auf der Grundlage einer Temperaturdifferenz zwischen einem gewünschten Temperaturwert und einen Umgebungstemperaturwert bestimmt wird.

3. Thermostat (10) nach Anspruch 1 oder 2, wobei die Anzeigefrequenz mit abnehmender Höhe der Ausgangsleistung abnimmt und umgekehrt.

4. Thermostat (10) nach Anspruch 1, 2 oder 3, wobei der visuelle Indikator (70, 80) eine Lichtquelle, insbesondere eine LED, umfasst.

5. Thermostat (10) nach Anspruch 4, wobei die Lichtquelle so gesteuert wird, dass sie Licht in einer pulsierenden Weise abstrahlt, wobei die Lichtquelle Licht zwischen einem größten Pegel und einen kleinsten Pegel abstrahlt.

6. Thermostat (10) nach den Ansprüchen 4 oder 5, wobei die Lichtquelle dafür ausgelegt ist, Licht in verschiedenen Farben auszusenden, wobei der Thermostat (10) des Weiteren dafür ausgelegt ist, die Farbe des abgestrahlten Lichts in Abhängigkeit von einem Temperaturwert zu steuern.

7. Thermostat (10) nach Anspruch 6, wobei der Temperaturwert ein Solltemperaturwert ist.

8. Thermostat (10) nach Anspruch 6, wobei der Temperaturwert ein gemessener Umgebungstemperaturwert ist.

9. Thermostat (10) nach Anspruch 7, wobei der visuelle Indikator (70, 80) eine weitere Lichtquelle umfasst, die dafür ausgelegt ist, Licht in verschiedenen Farben auszusenden, und wobei der Thermostat (10) des Weiteren dafür ausgelegt ist, die Farbe des abgestrahlten Lichts der weiteren Lichtquelle in Abhängigkeit von einem gemessenen Umgebungstemperaturwert zu steuern.

10. Thermostat (10) nach Anspruch 9, wobei die Lichtquellen farbiges Licht über mindestens einen wesentlichen Teil des sichtbaren Spektrums aussenden.

11. Thermostat (10) nach einem der vorangehenden Ansprüche, **dadurch gekennzeichnet dass** die Lichtquelle des visuellen Indikators (70, 80) dafür ausgelegt ist,
• farbiges Licht über mindestens einen wesentlichen Teil des sichtbaren Frequenzspektrums auszusenden,
• wobei sich die Farbfrequenz des ausgesendeten Lichts entsprechend einer abwechselnd ansteigenden und absteigenden Übergangsfunktion zwischen einem minimalen und einem maximalen Farbfrequenzwert über der Zeit ändert, und
• dass - im Falle einer allgemeinen Übergangsfunktion - die Zyklusdauer für eine ansteigende und absteigende Übergangsfunktion, oder - im Falle einer linearen Übergangsfunktion - die Frequenzänderungsgeschwindigkeit, die Höhe der Ausgangsleistung der Heizungs-, Lüftungs- und Klimaanlage repräsentiert.

12. Thermostat (10) nach Anspruch 11, **dadurch gekennzeichnet dass** die Lichtquelle des visuellen Indikators (70, 80) dafür ausgelegt ist,
• dass das Farbfrequenzspektrum des zwischen einem minimalen und einem maximalen Farbfrequenzwert abgestrahlten Lichts einem Temperaturwertespektrum zugeordnet ist, und
• dass die ansteigende und/oder absteigende Übergangsfunktion bei einer einen vorgebbaren Solltemperaturwert repräsentierenden Farbe für eine vorgebbare Haltedauer verharrt.

13. Thermostat (10) nach einem der vorangehenden Ansprüche, der des Weiteren einen programmierbaren Speicher umfasst.

14. Thermostat (10) nach einem der vorangehenden Ansprüche, wobei der visuelle Indikator (70, 80) des Weiteren dafür ausgelegt ist, alphanumerisch und/oder grafisch die Ist-Ausgangsleistung oder den Ist-Wirkungsgrad der Heizungs-, Lüftungs- und Klimaanlage anzuzeigen.

15. Verfahren zum Steuern einer Heizungs-, Lüftungs- und Klimaanlage, das Folgendes umfasst:
- Ermitteln eines Wertes der Ausgangsleistung der Heizungs-, Lüftungs- und Klimaanlage, und
- Steuern eines visuellen Indikators (70, 80), wobei dieser visuelle Indikator (70, 80) dafür ausgelegt ist, Betriebsinformationen der Heizungs-, Lüftungs- und Klimaanlage mit einer Anzeigefrequenz auf der Grundlage des ermittelten Wertes der Ausgangsleistung der Heizungs-, Lüftungs- und Klimaanlage anzuzeigen.

16. Verfahren nach Anspruch 13, wobei die Ausgangsleistung der Heizungs-, Lüftungs- und Klimaanlage auf der Grundlage einer Differenz zwischen einem gewünschten Temperaturwert und einem Umgebungstemperaturwert bestimmt wird.

17. Verfahren zum Bereitstellen einer Rückmeldung zum Betriebsstatus einer durch einen Thermostat (10) gesteuerten Heizungs-, Lüftungs- und Klimaanlage an einen Benutzer, wobei der Thermostat (10) einen visuellen Indikator (70, 80) umfasst, der dafür ausgelegt ist, Betriebsinformationen der Heizungs-, Lüftungs- und Klimaanlage anzuzeigen, wobei das Verfahren Folgendes umfasst:
- Ermitteln eines Wertes einer Ausgangsleistung der Heizungs-, Lüftungs- und Klimaanlage, und
- Steuern einer Anzeigefrequenz des visuellen Indikators (70, 80) auf der Grundlage des ermittelten Wertes der Ausgangsleistung der Heizungs-, Lüftungs- und Klimaanlage.

18. Verfahren nach Anspruch 15, wobei die Ausgangsleistung der Heizungs-, Lüftungs- und Klimaanlage auf der Grundlage einer Differenz zwischen einem gewünschten Temperaturwert und einem Umgebungstemperaturwert bestimmt wird.

19. Verfahren nach einem der Ansprüche 15 bis 18, **dadurch gekennzeichnet**
• **dass** die Lichtquelle des visuellen Indikators (70, 80) farbiges Licht über mindestens einen wesentlichen Teil des sichtbaren Frequenzspektrums aussendet,
• wobei sich die Farbfrequenz des ausgesendeten Lichts entsprechend einer abwechselnd ansteigenden und absteigenden Übergangsfunktion zwischen einem minimalen und einem maximalen Farbfrequenzwert über der Zeit ändert, und
• **dass** - im Falle einer allgemeinen Übergangsfunktion - die Zyklusdauer für eine ansteigende und absteigende Übergangsfunktion, oder - im Falle einer linearen Übergangsfunktion - die Frequenzänderungsgeschwindigkeit, die Höhe der Ausgangsleistung der Heizungs-, Lüftungs- und Klimaanlage repräsentiert.

20. Verfahren nach Anspruch 19, **dadurch gekennzeichnet**
• **dass** das Farbfrequenzspektrum des zwischen einem minimalen und einem maximalen Farbfrequenzwert abgestrahlten Lichts einem Temperaturwertespektrum zugeordnet ist, und
• **dass** die ansteigende und/oder absteigende Übergangsfunktion bei einer einen vorgebbaren Solltemperaturwert repräsentierenden Farbe für eine vorgebbare Haltedauer verharrt.
